# EUROPEAN PATENT APPLICATION

(11) **EP 3 623 671 A1**
(43) Date of publication of application: **18.03.2020**
(21) Application number: 19192809.2
(22) Date of filing: 21.08.2019
(51) Int. Cl.: F16K 1/12, F16K 1/42, G05D 16/10

(54) **REGULATOR**

(30) Priority: 11.09.2018 JP 2018169913
(71) Applicant: Nikki Co., Ltd., Kanagawa-ken 243-0801 (JP)
(72) Inventor: SUENAGA, Naoya, Atsugi, Kanagawa 243-0801 (JP)
(74) Representative: Boult Wade Tennant LLP

(57) **Abstract**

A valve seat unit includes a valve seat and a valve seat holding member which are integrally formed by insert molding. The valve seat includes a shaft body, a locking body, and a valve seat main body which are integrally formed. The shaft body is fitted into a holding part which is a through hole having openings exposed on a side face of the valve seat holding member on an introduction port side and a side face on a pressure regulating chamber side. The locking body is joined and disposed along the side face of the valve seat holding member on the introduction port side and has a larger diameter than the shaft body. The valve seat main body is joined and disposed along the side face of the valve seat holding member on the pressure regulating chamber side and has a larger diameter than the shaft body.

## Description

### BACKGROUND

### Technical Field

The present invention relates to a regulator used in reducing the pressure of a high-pressure fluid to a desired pressure.

### Related Art

A regulator that opens and closes a pressure regulating valve through a piston by pressure fluctuations in a pressure regulating chamber to control a flow rate of a high-pressure fluid has been known for a long time, for example, as disclosed in JP 52-92436 Y and used in a pressure regulator when high-pressure fuel such as CNG stored in a fuel tank is supplied to an engine.

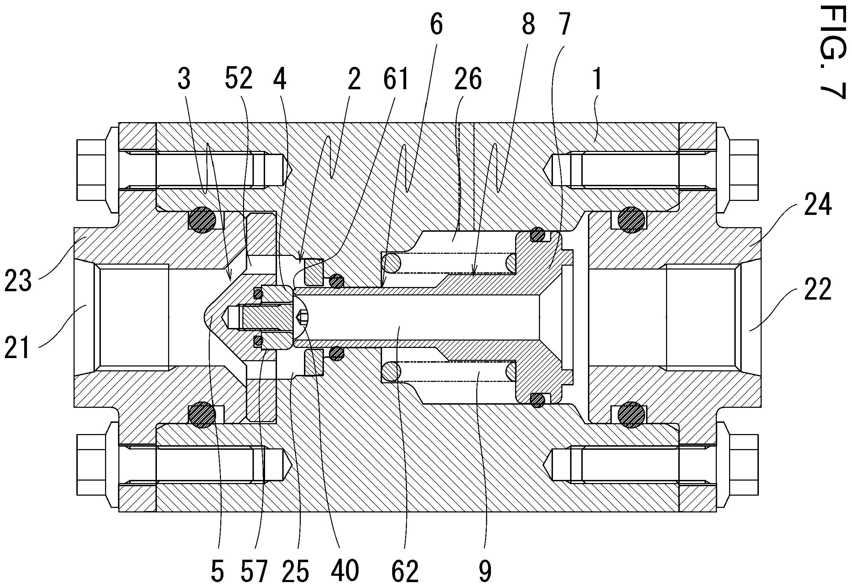

FIG. 7 illustrates an example of the conventional regulator. In a tubular passage 2 which penetrates a body part 1, one opening end serves as an introduction port 21 for a high-pressure fluid and the other opening end serves as an outlet port 22 for a decompressed fluid. An inlet cover 23 for air-tightly introducing the high-pressure fluid is disposed on the introduction port 21, and an outlet cover 24 for air-tightly taking out the pressure-regulated decompressed fluid is disposed on the outlet port 22.

A valve seat unit 3 is disposed at a predetermined position by the inlet cover 23 on the inner side of the introduction port 21 in the passage 2. The valve seat unit 3 includes a valve seat 4 having a cylindrical shape and a seat holding member 5. The valve seat 4 is fixed to a holding part 57 of the seat holding member 5, the holding part 57 being formed on the outlet port 22 side, with a fixing screw 40. The seat holding member 5 is a partition wall including a plurality of through holes 52 extending in an axial direction of the passage 2. A pressure regulating chamber 25, which is sectioned by the valve seat unit 3, is formed on the outlet port 22 side of the valve seat 4 in the passage 2.

Further, a piston pressure regulating valve 8 is slidably disposed in the axial direction of the passage 2 between the pressure regulating chamber 25 and the outlet port 22. The piston pressure regulating valve 8 includes a pressure regulating valve element 6 and a piston part 7. The pressure regulating valve element 6 includes a tip face 61 which is capable of making intimate contact with the valve seat 4 of the valve seat unit 3 and a tubular communication passage 62 with both ends open. The piston part 7 surrounds the outer periphery of the pressure regulating valve element 6 on the outlet port 22 side in the passage 2 and has a larger diameter than the pressure regulating valve element 6.

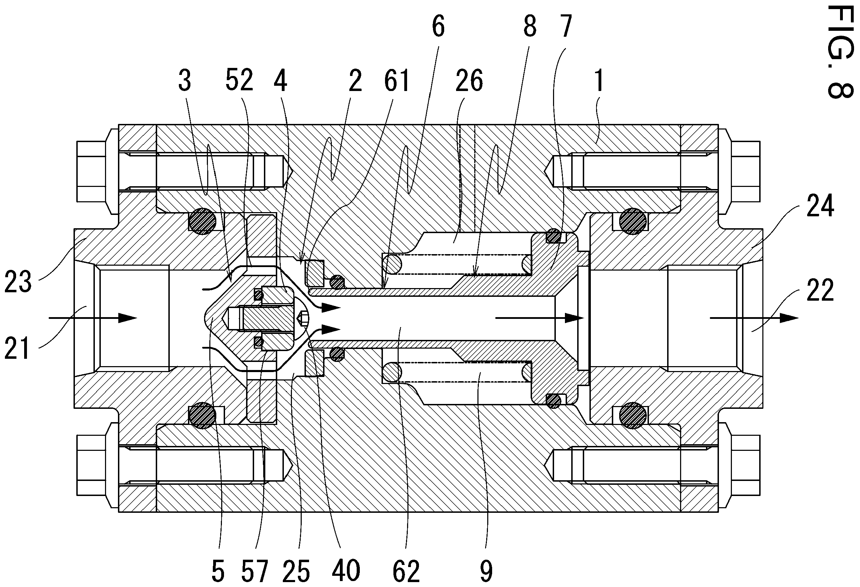

Further, the piston part 7 is biased toward the outlet port 22 of the passage 2 by a pressure regulating spring 9 having a predetermined load. The pressure regulating spring 9 is disposed inside an atmospheric chamber 26 which is disposed around the piston part 7 coaxially with the pressure regulating chamber 25 in parallel. As illustrated in FIG. 8, a high-pressure fluid introduced through the introduction port 21 is introduced into the pressure regulating chamber 25, which faces the valve seat 4, through the through hole 52 formed on the valve seat holding member 5 of the valve seat unit 3, and passes through the pressure regulating valve element 6 in which the communication passage 62 is formed. Then, a load by the pressure of the fluid acting on the piston part 7 which is joined to the pressure regulating valve element 6 is balanced with a load by the pressure regulating spring 9 acting on the piston part 7 to the side opposite to the pressure regulating chamber 25 to change an opening area between the valve seat 4 and the pressure regulating valve element 6 to control the fluid pressure in the pressure regulating chamber 25. Accordingly, the decompressed fluid regulated to a desired pressure is taken out through the outlet port 22.

However, in the valve seat unit 3 of the conventional regulator, the valve seat 4 is fixed with the fixing screw 40. Thus, a component and a manufacturing process for fixing are additionally required. In particular, in order to bring the valve seat 4 into intimate contact with the tip face 61 of the pressure regulating valve element 6, the valve seat 4 requires highly accurate molding and disposition. Thus, time for attachment and an expensive component are disadvantageously required. In addition, the attachment with the fixing screw 40 causes a problem in that the fixing screw 40 is loosened during use, which results in displacement or coming-off of the valve seat 4.

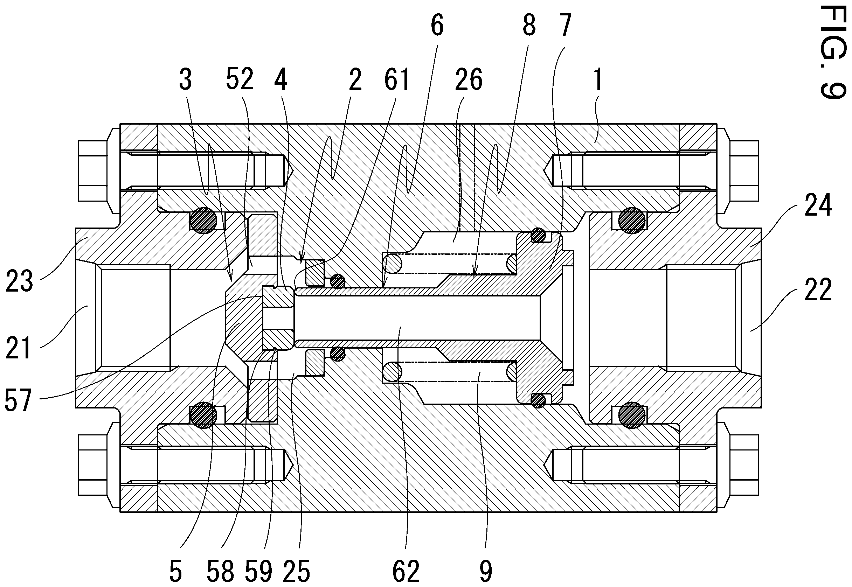

As illustrated in FIG. 9, there is also known attachment means in which the valve seat 4 is press-fitted into the holding part 57 of the valve seat holding member 5 and fixed by an annular projection 59 which projects from an inner peripheral face 58 of the holding part 57. This attachment means does not require a separate attachment component, and the manufacturing process is easy.

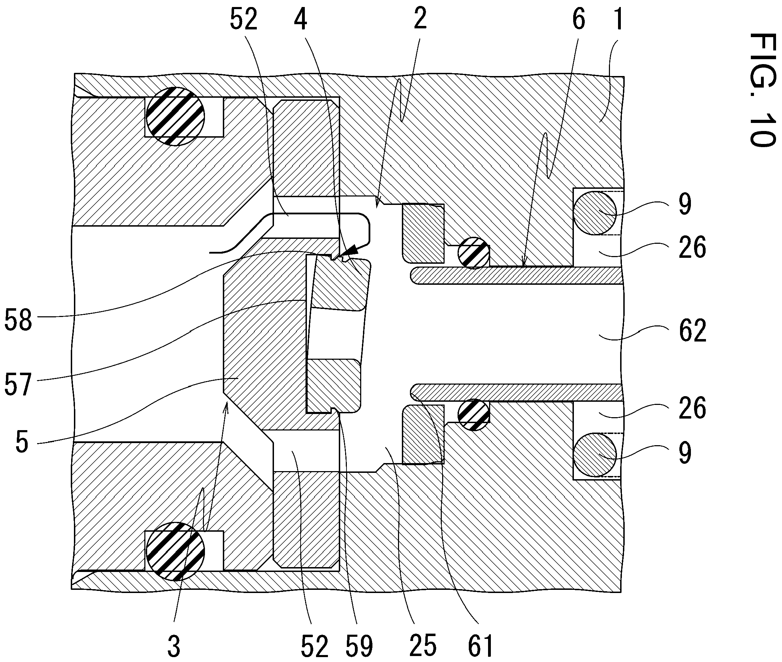

However, when the valve seat 4 is made of an elastic material, the valve seat 4 easily comes off due to deterioration caused by use or an adhesive force generated between the valve seat 4 and the pressure regulating valve element 6. When a disuse period is continued for a long time, this problem becomes remarkable. In addition, there is also another problem in that the high-pressure fluid flows back and applies pressure between the valve seat 4 and the holding part 57 during use, and the valve seat 4 thereby comes off the holding part 57 (refer to FIG. 10).

### SUMMARY

The present invention has been made to solve the above problems, and an object thereof is to provide a regulator including a valve seat that can be accurately attached without a separate attachment component and has not fear of coming-off during use.

A regulator according to the present invention that has been made to solve the above problems includes:
a body part;
a passage having a tubular shape and penetrating the body part, the passage including one opening end serving as an introduction port for a high-pressure fluid and the other opening end serving as an outlet port for a decompressed fluid;
a valve seat unit including a valve seat on an inner side and a valve seat holding member including a through hole extending in an axial direction of the passage;
a pressure regulating chamber disposed on an inner side of the introduction port in the passage through the valve seat unit; and
a piston pressure regulating valve slidably biased in the axial direction of the passage between the pressure regulating chamber and the outlet port in the passage, the piston pressure regulating valve including
   a pressure regulating valve element including a tip face capable of making intimate contact with the valve seat and a tubular communication passage with both ends open, and
   a piston part surrounding an outer periphery of the pressure regulating valve element on the outlet port side in the passage, wherein
the high-pressure fluid introduced through the introduction port is introduced into the valve seat and the pressure regulating chamber facing the valve seat through the through hole formed on the valve seat holding member of the valve seat unit and taken out as the decompressed fluid from the outlet port through the communication passage of the pressure regulating valve element,
the valve seat holding member includes a holding part that is a groove or a hole, the holding part including an opening exposed on the pressure regulating chamber side and an inner peripheral face having a larger diameter than the opening, the inner peripheral face being formed on at least a part of the holding part, and
the valve seat includes a locking body fitted into the holding part, and a valve seat main body joined and disposed along a side face of the valve seat holding member, the side face being located on the pressure regulating chamber side, and brought into intimate contact with the pressure regulating valve element, the locking body and the valve seat main body are integrally formed, and the valve seat is insert-molded into the valve seat holding member.

In another aspect, a regulator includes:
a body part;
a passage having a tubular shape and penetrating the body part, the passage including one opening end serving as an introduction port for a high-pressure fluid and the other opening end serving as an outlet port for a decompressed fluid;
a valve seat unit including a valve seat on an inner side and a valve seat holding member including a through hole extending in an axial direction of the passage;
a pressure regulating chamber disposed on an inner side of the introduction port in the passage through the valve seat unit; and
a piston pressure regulating valve slidably biased in the axial direction of the passage between the pressure regulating chamber and the outlet port in the passage, the piston pressure regulating valve including
a pressure regulating valve element including a tip face capable of making intimate contact with the valve seat and a tubular communication passage with both ends open, and
a piston part surrounding an outer periphery of the pressure regulating valve element on the outlet port side in the passage, wherein
the high-pressure fluid introduced through the introduction port is introduced into the valve seat and the pressure regulating chamber facing the valve seat through the through hole formed on the valve seat holding member of the valve seat unit and taken out as the decompressed fluid from the outlet port through the communication passage of the pressure regulating valve element,
the valve seat holding member includes a holding part that is a through hole having openings exposed on a side face on the introduction port side and a side face on the pressure regulating chamber side, and
the valve seat includes a shaft body fitted into the holding part, a locking body joined and disposed along the side face of the valve seat holding member on the introduction port side and having a larger diameter than the shaft body, and a valve seat main body joined and disposed along the side face of the valve seat holding member on the pressure regulating chamber side and having a larger diameter than the shaft body, the shaft body, the valve seat main body, and the locking body are integrally formed, and the valve seat is insert-molded into the valve seat holding member.

Further, in the present invention, when the holding part that is a through hole formed on the valve seat holding member expands toward the pressure regulating chamber and the introduction port, it is possible to accurately fix the valve seat to a predetermined position and prevent the valve seat from moving in the axial direction.

Further, when the valve seat is made of super-engineering plastics, there are advantages in that the valve seat has a high wear resistance, is lightweight, does not rust, can be accurately molded, is suitable for mass production, and, in particular, is resistant to fuel to be used and to high temperature.

Further, when a diameter of the valve seat main body in the valve seat is equal to or larger than a diameter of a tip of the pressure regulating valve element disposed facing the valve seat main body, opening and closing actions can be reliably exhibited.

In addition, when a valve seat side inner peripheral tip of the pressure regulating valve element is formed in a tapered shape expanding toward the tip, the valve seat and the pressure regulating valve element can be reliably brought into intimate contact with each other and closed.

According to the present invention, it is possible to provide a regulator including a valve seat unit that eliminates variations caused by individual differences in components constituting the valve seat unit and skills of manufacturers and includes a valve seat accurately and reliably attached and having no fear of coming-off during use.

### BRIEF DESCRIPTION OF DRAWINGS

FIG. 1 is a sectional view illustrating a state when a valve is closed in an embodiment of the present invention;
FIG. 2 is a sectional view illustrating a state when the valve is open in the embodiment illustrated in FIG. 1;
FIGS. 3A to 3D illustrate a valve seat unit in the embodiment illustrated in FIGS. 1 and 2, wherein FIG. 3A is a longitudinal sectional view of a valve seat, FIG. 3B is a longitudinal sectional view of a valve seat holding member, FIG. 3C is a longitudinal sectional view of the valve seat unit, and FIG. 3D is perspective view of the valve seat unit;
FIGS. 4A to 4C are explanatory diagrams illustrating an example of a manufacturing process of the valve seat unit illustrated in FIGS. 3A to 3D, wherein FIG. 4A is a sectional view of a state in which the valve seat holding member is attached to an insert molding machine, FIG. 4B is a sectional view of a state in which resin forming the valve seat is injected, and FIG. 4C is a sectional view of a state in which the valve seat unit is completed;
FIG. 5 is a sectional view illustrating another embodiment of the present invention;
FIG. 6 is a sectional view illustrating still another embodiment of the present invention;
FIG. 7 is a sectional view illustrating a state when a valve is closed in a conventional example;
FIG. 8 is a sectional view illustrating a state when the valve is open in the conventional example illustrated in FIG. 7;
FIG. 9 is a sectional view illustrating another conventional example; and
FIG. 10 is an explanatory diagram illustrating a failure example in the conventional example illustrated in FIG. 9.

### DETAILED DESCRIPTION

Hereinbelow, embodiments for carrying out the present invention will be described with reference to the drawings.

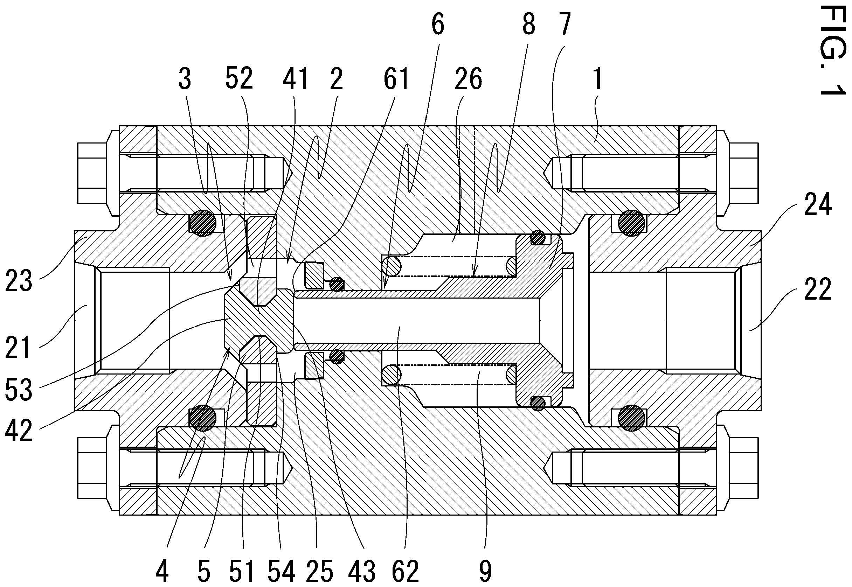

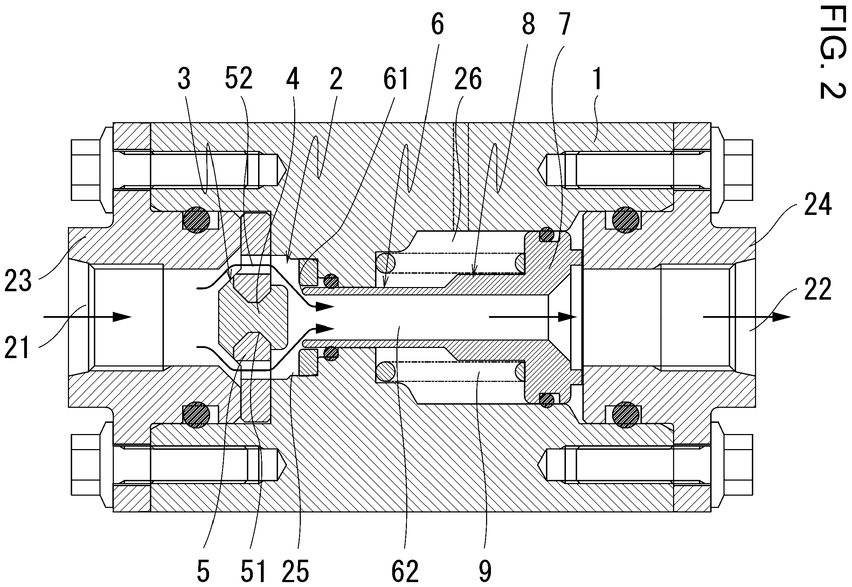

FIGS. 1 and 2 are sectional views of a preferred embodiment in the present invention. The entire configuration of the present embodiment is substantially similar to the conventional example illustrated in FIGS. 7 to 10, and detailed description of the similar part will be omitted. Further, elements identical to the elements of the conventional example are designated by the same reference signs as the conventional example in description.

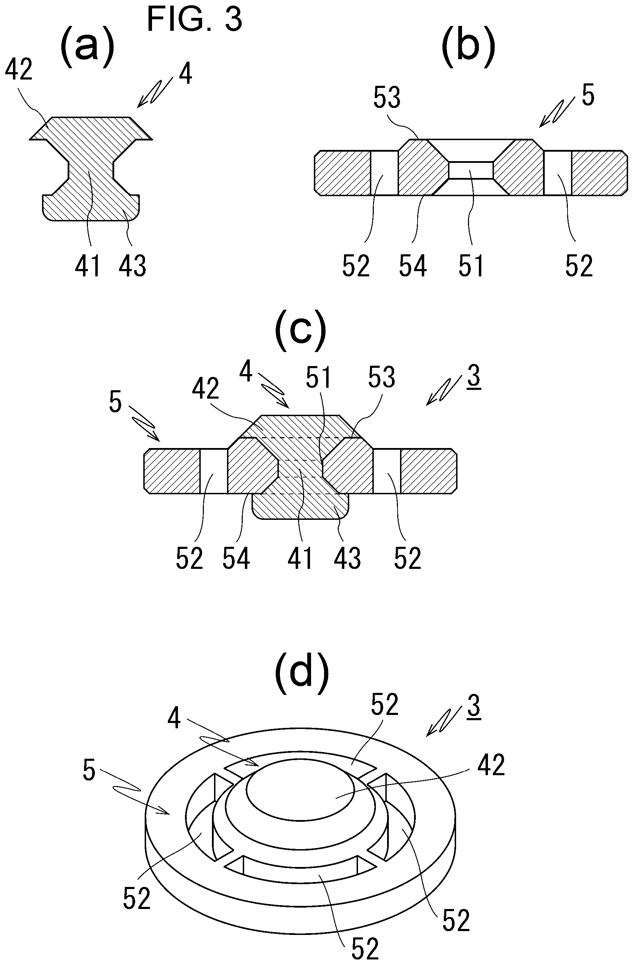

A particular difference from the conventional example is the configuration of a valve seat unit 3. As illustrated in FIGS. 3A to 3D, the valve seat unit 3 in the present embodiment includes a valve seat 4 which includes a shaft body 41, a locking body 42, and a valve seat main body 43. The shaft body 41 is fitted into a holding part 51 of a valve seat holding member 5. The holding part 51 is a through hole having openings exposed on a side face 53 of the valve seat holding member 5, the side face 53 being located on an introduction port 21 side, and a side face 54 of the valve seat holding member 5, the side face 54 being located on a pressure regulating chamber 25 side. The locking body 42 is joined and disposed along the side face 53 of the valve seat holding member 5 and has a larger diameter than the shaft body 41. The valve seat main body 43 is joined and disposed along the side face 54 of the valve seat holding member 5 and has a larger diameter than the shaft body 41, the side face 54 being located on the pressure regulating chamber 25 side. The shaft body 41, the locking body 42, and the valve seat main body 43 are integrally formed.

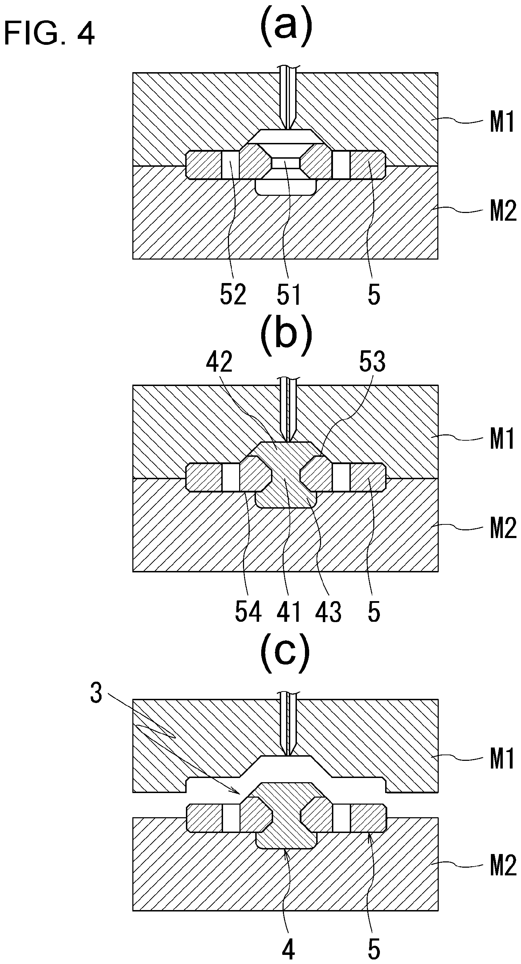

The valve seat unit 3 in the present embodiment requires the valve seat 4 made of a thermoplastic resin or a thermosetting resin. In particular, the valve seat 4 is preferably made of conventionally-known engineering plastics or conventionally-known super-engineering plastics. For example, the valve seat 4 and the valve seat holding member 5 are integrally formed by insert molding as illustrated in FIGS. 4A to 4C.

Specifically, the valve seat 4 of the present embodiment is, for example, formed by insert molding in which the valve seat holding member 5 which is previously formed by a predetermined forming method such as cutting or casting is attached between metal molds M1, M2 for insert molding (refer to FIG. 4A), resin is filled into a cavity (refer to FIG. 4B), and the integrated body of the valve seat 4 and the valve seat holding member 5 is taken out after the resin is cured (refer to FIG. 4C).

FIGS. 4A to 4C merely illustrate an example of a manufacturing process by insert molding and do not illustrate an air vent hole formed on the metal molds M1, M2.

A minute gap may be formed between the valve seat 4 and the valve seat holding member 5 due to shrinkage during curing depending on the material of the valve seat 4 (not illustrated) . However, passage of a high-pressure fluid through the minute gap does not hinder a function as the valve seat unit 3 when a valve is closed. Instead, the minute gap enables automatic alignment, which further improves the accuracy.

Although the valve seat holding member 5 is preferably made of metal, the valve seat holding member 5 may be made of a hard resin or another hard material.

The valve seat unit 3 used in the present embodiment having the above configuration makes it possible to eliminate the necessity of a separate member for attachment required in the conventional example and reduce procurement and management of components and the manufacturing process. As a result, it is possible to reduce the manufacturing cost. Further, attachment and use accuracy are excellent, and there is no fear of coming-off.

In the present embodiment, the holding part 51, which is a through hole formed on the valve seat holding member 5, expands toward the pressure regulating chamber 25 and the introduction port 21. Accordingly, it is possible to accurately fix the valve seat 4 to a predetermined position and prevent the valve seat 4 from moving in the axial direction.

Further, in the present embodiment, the valve seat 4 is made of engineering plastics or super-engineering plastics. Thus, there are advantages in that the valve seat 4 has a high wear resistance, is lightweight, does not rust, can be accurately molded, is suitable for mass production, and, in particular, is resistant to fuel to be used and to high temperature.

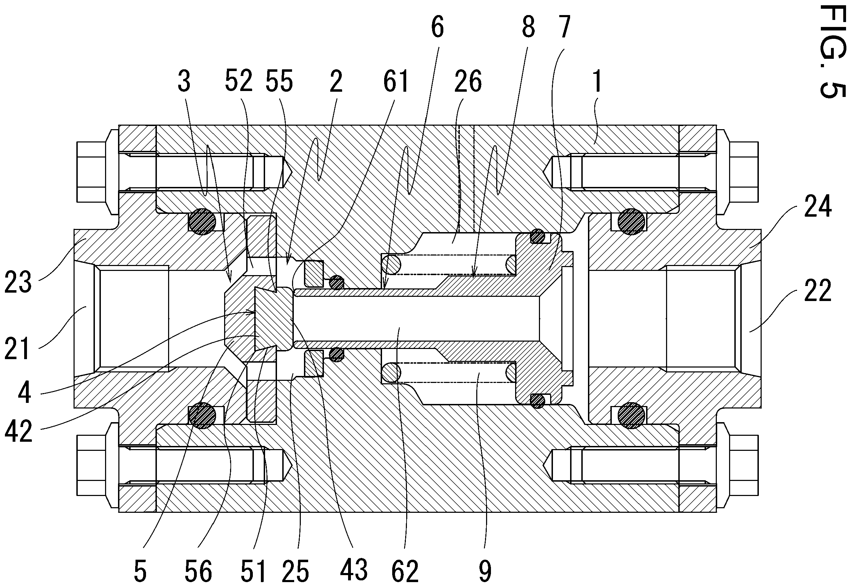

FIG. 5 illustrates another embodiment of the present invention. A valve seat holding member 5 in the present embodiment includes a holding part 51 which is a groove including an opening 55 exposed on the pressure regulating chamber 25 side and an inner peripheral face 56 having a larger diameter than the opening 55, the inner peripheral face 56 being formed on at least a part of the holding part 51. A valve seat 4 includes a locking body 42 and a valve seat main body 43. The locking body 42 is fitted into the holding part 51. The valve seat main body 43 is joined and disposed along a side face 54 of the valve seat holding member 5, the side face 54 being located on the pressure regulating chamber 25 side, and brought into intimate contact with the pressure regulating valve element 6. The locking body 42 and the valve seat main body 43 are integrally formed. The valve seat 4 is insert-molded into the valve seat holding member 5.

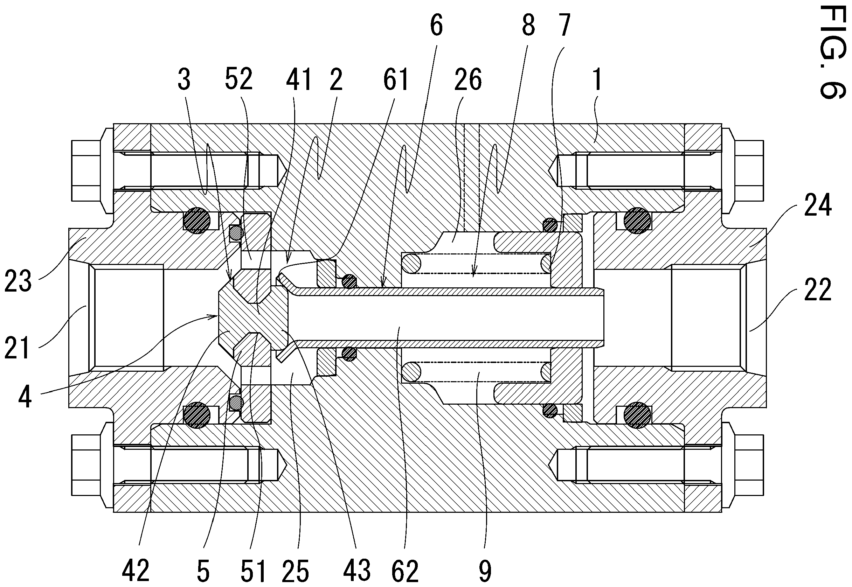

FIG. 6 illustrates a still another embodiment of the present invention. In the embodiment illustrated in FIG. 1, since the diameter of the valve seat main body 43 in the valve seat 4 is equal to or larger than the diameter of the tip of the pressure regulating valve element 6 which is disposed facing the valve seat main body 43, opening and closing actions can be reliably performed. On the other hand, in the present embodiment, a tip face 61 of the pressure regulating valve element 6, the tip face 61 facing the valve seat 4, is formed in a tapered shape expanding toward the tip. Thus, the valve seat 4 and the pressure regulating valve element 6 can be reliably brought into intimate contact with each other and closed.

## Claims

1. A regulator comprising:
a body part;
a passage having a tubular shape and penetrating the body part, the passage including one opening end serving as an introduction port for a high-pressure fluid and the other opening end serving as an outlet port for a decompressed fluid;
a valve seat unit including a valve seat on an inner side and a valve seat holding member including a through hole extending in an axial direction of the passage;
a pressure regulating chamber disposed on an inner side of the introduction port in the passage through the valve seat unit; and
a piston pressure regulating valve slidably biased in the axial direction of the passage between the pressure regulating chamber and the outlet port in the passage, the piston pressure regulating valve including
a pressure regulating valve element including a tip face capable of making intimate contact with the valve seat and a tubular communication passage with both ends open, and
a piston part surrounding an outer periphery of the pressure regulating valve element on the outlet port side in the passage, wherein
the high-pressure fluid introduced through the introduction port is introduced into the valve seat and the pressure regulating chamber facing the valve seat through the through hole formed on the valve seat holding member of the valve seat unit and taken out as the decompressed fluid from the outlet port through the communication passage of the pressure regulating valve element,
the valve seat holding member includes a holding part that is a groove or a hole, the holding part including an opening exposed on the pressure regulating chamber side and an inner peripheral face having a larger diameter than the opening, the inner peripheral face being formed on at least a part of the holding part, and
the valve seat includes a locking body fitted into the holding part, and a valve seat main body joined and disposed along a side face of the valve seat holding member, the side face being located on the pressure regulating chamber side, and brought into intimate contact with the pressure regulating valve element, the locking body and the valve seat main body are integrally formed, and the valve seat is insert-molded into the valve seat holding member.

2. A regulator comprising:
a body part;
a passage having a tubular shape and penetrating the body part, the passage including one opening end serving as an introduction port for a high-pressure fluid and the other opening end serving as an outlet port for a decompressed fluid;
a valve seat unit including a valve seat on an inner side and a valve seat holding member including a through hole extending in an axial direction of the passage;
a pressure regulating chamber disposed on an inner side of the introduction port in the passage through the valve seat unit; and
a piston pressure regulating valve slidably biased in the axial direction of the passage between the pressure regulating chamber and the outlet port in the passage, the piston pressure regulating valve including
a pressure regulating valve element including a tip face capable of making intimate contact with the valve seat and a tubular communication passage with both ends open, and
a piston part surrounding an outer periphery of the pressure regulating valve element on the outlet port side in the passage, wherein
the high-pressure fluid introduced through the introduction port is introduced into the valve seat and the pressure regulating chamber facing the valve seat through the through hole formed on the valve seat holding member of the valve seat unit and taken out as the decompressed fluid from the outlet port through the communication passage of the pressure regulating valve element,
the valve seat holding member includes a holding part that is a through hole having openings exposed on a side face on the introduction port side and a side face on the pressure regulating chamber side, and
the valve seat includes a shaft body fitted into the holding part, a locking body joined and disposed along the side face of the valve seat holding member on the introduction port side and having a larger diameter than the shaft body, and a valve seat main body joined and disposed along the side face of the valve seat holding member on the pressure regulating chamber side and having a larger diameter than the shaft body, the shaft body, the valve seat main body, and the locking body are integrally formed, and the valve seat is insert-molded into the valve seat holding member.

3. The regulator according to claim 2, wherein the holding part that is a through hole formed on the valve seat holding member expands toward the pressure regulating chamber and the introduction port.

4. The regulator according to according to any one of claims 1 to 3, wherein the valve seat is made of super-engineering plastics.

5. The regulator according to any one of claims 1 to 4, wherein a diameter of the valve seat main body in the valve seat is equal to or larger than a diameter of a tip of the pressure regulating valve element disposed facing the valve seat main body.

6. The regulator according to any one of claims 1 to 4, wherein a valve seat side inner peripheral tip of the pressure regulating valve element is formed in a tapered shape expanding toward the tip.
